# EUROPÄISCHE PATENTANMELDUNG

(11) **EP 1 621 835 A2**
(43) Veröffentlichungstag der Anmeldung: **01.02.2006**
(21) Anmeldenummer: 05012804.0
(22) Anmeldetag: 14.06.2005
(51) Int. Cl.: F25D 23/12

(54) **Kühlgerät**

(30) Priorität: 26.07.2004 DE 202004011664 U
(71) Anmelder: Liebherr-Hausgeräte Lienz GmbH, 9900 Lienz (AT)
(72) Erfinder: Gillen, Jürgen, 9991 Dölsach (AT)
(74) Vertreter: Laufhütte, Dieter

(57) **Zusammenfassung**

Die Erfindung betrifft ein Kühlgerät (10) mit einem wärmeisolierenden Gehäuse (12) und einer Tür (14) mit mindestens einer Aufhängung (16,18,24,28) im Deckenbereich des Gehäuses zum Aufhängen von Kühlgut, insbesondere Wild. Erfindungsgemäß ist in der Aufhängung eine Wiegeeinrichtung (30) integriert.

## Beschreibung

Die Erfindung betrifft ein Kühlgerät mit einem wärmeisolierenden Gehäuse und einer Tür mit mindestens einer Aufhängung im Deckenbereich des Gehäuses zum Aufhängen von Kühlgut, insbesondere Wild.

Es ist bereits bekannt, Kühlschränke zu sogenannten Wildkühlschränken umzubauen. Hierzu werden konventionelle Kühlschränke in ihrem Deckenbereich mit einer Aufhängung für das zu kühlende Wild versehen. Üblicherweise ist hier nahe der Decke eine querverlaufende Stange angeordnet, an die über sogenannte S-Haken das zu kühlende Wild aufgehängt werden kann. Bekannte Wildkühlschränke sind bereits so bemessen, dass das Wild, beispielsweise Rotwild oder Schwarzwild, in seiner gesamten Länge im Kühlschrank aufgehängt werden kann. Bei den bekannten Wildkühlschränken handelt es sich in der Regel um übliche Umluftkühlschränke, die nachträglich umgebaut werden.

Aufgabe der vorliegenden Erfindung ist es, ein Kühlgerät zum Aufhängen von Kühlgut, insbesondere Wild zu schaffen, das zusätzlich zu der Kühlaufgabe Informationen zu dem zu lagernden Kühlgut gibt.

Erfindungsgemäß wird diese Aufgabe ausgehend von einem Kühlgerät nach dem Oberbegriff des Anspruchs 1 durch die Kombination mit den Merkmalen des kennzeichnenden Teils des Anspruchs 1 gelöst. Demnach ist in einem Kühlgerät mit einem wärmeisolierenden Gehäuse und einer Tür mit mindestens einer Aufhängung im Deckenbereich des Gehäuses zum Aufhängen von Kühlgut, insbesondere Wild, in der Aufhängung eine Wiegeeinrichtung integriert. Diese Wiegeeinrichtung ermöglicht es, gleichzeitig mit Abhängen des Wildbrets das Gewicht dieses Kühlgutes zu bestimmen.

Bevorzugte Ausgestaltungen der Erfindung ergeben sich aus den sich an den Hauptanspruch anschließenden Unteransprüchen.

Demnach kann die Wiegeeinrichtung bevorzugt eine Wiegezelle oder Federwaage sein. Die Wiegeeinrichtung kann mit einer elektronischen Anzeige verbunden sein. Diese Anzeige kann unmittelbar an der Wiegeeinrichtung aber auch an einem anderen Ort im Bereich des Kühlgeräts angeordnet sein.

Besonders vorteilhaft ist außen auf der Decke des Kühlgeräts eine Seilwinde montiert, deren Seil durch eine Öffnung in die Decke in das Gehäuse geführt ist. Über diese Seilwinde kann das teilweise sehr schwere Kühlgut im Kühlgerät hochgezogen werden, so dass es mühelos in seine hängende Lagerposition verbracht werden kann.

Vorzugsweise weist die Seilwinde einen Motor auf, der über eine Fernbedienung ansteuerbar ist. Um eine Fehlfunktion sicher auszuschließen kann der Motor zweckmäßigerweise über einen Sicherheitsendschalter verfügen.

Im Innenraum des Kühlgerätes kann eine Stange mit Haken zum Einhängen des Gefriergutes, insbesondere des Wildes, angebracht sein. Somit kann das gegebenenfalls über die Seilwinde hochgezogene Wild an der gewünschten Position auf der Stange abgehängt werden.

Der Innenraum des Kühlgerätes besteht vorzugsweise aus rostfreiem Edelstahl. Dabei kann der Innenraum aus einem fugenlos gezogenen Edelstahlbehälter bestehen, aber auch aus einem fugenlos gezogenen Kunststoffbehälter. Diese Innenbehälterausführung vereinfacht die Reinigung des Kühlgeräts, die so beispielsweise mittels Hochdruckreiniger möglich ist.

Gemäß einer weiteren bevorzugten Ausgestaltung der Erfindung ist eine Bodenwanne vorgesehen, die den gesamten Gerätebodenbereich abdeckt. Die Bodenwanne ist dabei so gestaltet, dass sie zum Entleeren und Reinigen leicht entnehmbar ist.

Besonders bevorzugt ist das gesamte Kühlaggregat an der Schrankdecke bzw. im oberen Schrankbereich an der Rückwand des Kühlgerätes montiert, um Feuchtigkeitsschäden beim Reinigungsvorgang des Innenraums zu vermeiden.

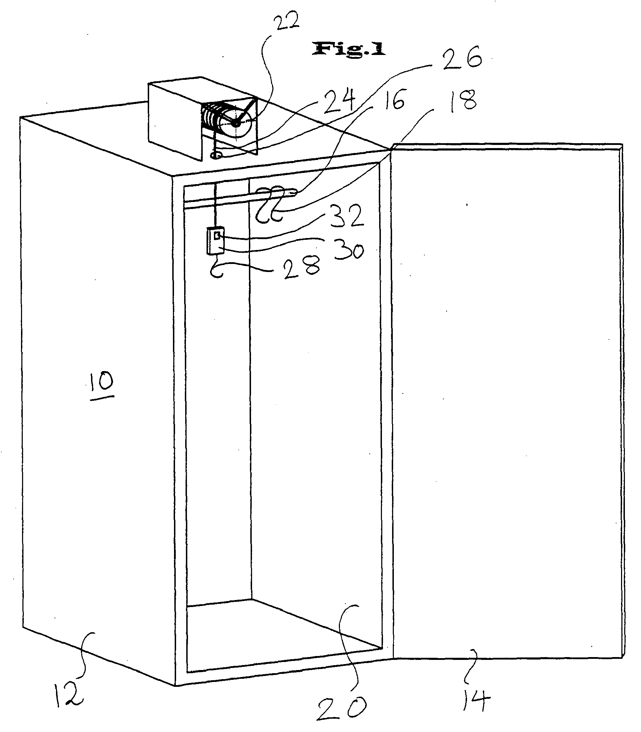

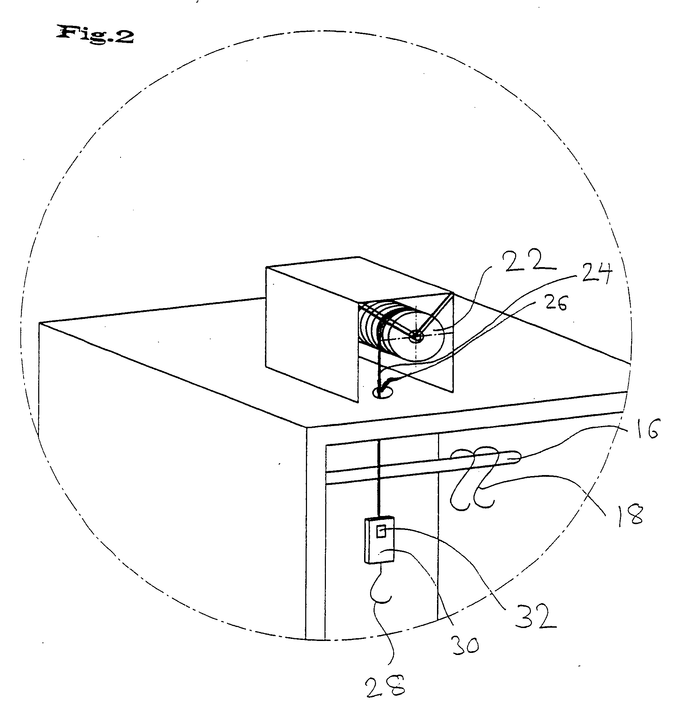

Weitere Einzelheiten und Vorteile der Erfindung ergeben sich aus dem sich in der Zeichnung dargestellten Ausführungsbeispiel. Figur 1 zeigt ein Ausführungsbeispiel eines erfindungsgemäßen Kühlgerätes, das insbesondere zur gekühlten Aufbewahrung von Wild geeignet ist. Figur 2 zeigt eine vergrößerte Detaildarstellung der Figur 1.

In den Figuren 1 und 2 ist ein in seinen Außenabmessungen einem Schrank gleichendes Kühlgerät 10 dargestellt, das ein wärmeisolierendes Gehäuse 12 und eine seitlich angeschlagene Tür 14 aufweist. Im Deckenbereich des Gehäuses ist innen eine querverlaufende Stange 16 integriert, an der S-Haken 18 eingehängt sind, die zur Aufnahme des abzuhängenden Wildbrets dienen. Der Innenraum besteht im hier dargestellten Kühlgerät 10 aus einem fugenlos gezogenen Edelstahlbehälter 20, der eine einfache und vollständige Reinigung mittels eines Hochdruckreinigers zulässt. Die Kühlung des Kühlgerätes erfolgt über ein hier nicht näher dargestelltes Kühlaggregat, das im oberen Bereich des Kühlgeräts an der Rückwand angeordnet ist.

Auf der Decke des Kühlgeräts ist in der Figur schematisch eine motorisch angetriebene Seilwinde 22 dargestellt, über welche ein Seil 24 durch eine im Kühlgerät vorgesehene Öffnung 26 in das Innere des Kühlgeräts 10 eingeführt ist. An dem Seil 26 ist als Aufhängevorrichtung ein Haken 28 angehängt.

Zur Ermittlung des Gewichts des an der Seilwinde 22 angehängten Kühlgutes, beispielsweise des Wildbrets, ist eine Wiegezelle 30 am Seil 24 angeordnet. Die Wiegezelle 30 weist im hier dargestellten Ausführungsbeispiel eine integrierte elektronische Anzeige 32 auf, über die das Gewicht abgelesen werden kann. Das mit der Seilwinde hochgezogene Wildbret kann nach entsprechender Positionierung an die Haken 18 gehängt werden, so dass mittels der Seilwinde 22 ein weiteres Wildbret hochgezogen werden kann.

## Patentansprüche

1. Kühlgerät mit einem wärmeisolierenden Gehäuse und einer Tür mit mindestens einer Aufhängung im Deckenbereich des Gehäuses zum Aufhängen von Kühlgut, insbesondere Wild,
**dadurch gekennzeichnet,**
**dass** in der Aufhängung eine Wiegeeinrichtung integriert ist.

2. Kühlgerät nach Anspruch 1, **dadurch gekennzeichnet, dass** die Wiegeeinrichtung eine Wiegezelle oder Federwaage ist.

3. Kühlgerät nach Anspruch 1, **dadurch gekennzeichnet, dass** die Wiegeeinrichtung mit einer elektronischen Anzeige verbunden ist.

4. Kühlgerät nach einem der Ansprüche 1 bis 3, **dadurch gekennzeichnet, dass** außen auf der Decke des Kühlgerätes eine Seilwinde montiert ist, deren Seil durch eine Öffnung in der Decke in das Gehäuse geführt ist.

5. Kühlgerät nach Anspruch 4, **dadurch gekennzeichnet, dass** die Seilwinde einen Motor aufweist, der über eine Fernbedienung ansteuerbar ist.

6. Kühlgerät nach einem der Ansprüche 4 oder 5, **dadurch gekennzeichnet, dass** der Motor über einen Sicherheitsendschalter verfügt.

7. Kühlgerät nach einem der Ansprüche 1 bis 6, **dadurch gekennzeichnet, dass** im Innenraum eine Stange mit Haken zum Einhängen des Gefriergutes, insbesondere des Wildes, angebracht ist.

8. Kühlgerät nach einem der Ansprüche 1 bis 7, **dadurch gekennzeichnet, dass** der Innenraum aus rostfreiem Edelstahl besteht.

9. Kühlgerät nach einem der Ansprüche 1 bis 7, **dadurch gekennzeichnet, dass** der Innenraum aus einem fugenlos gezogenen Kunststoff- oder Edelstahlbehälter besteht.

10. Kühlgerät nach einem der Ansprüche 1 bis 9, **gekennzeichnet durch** eine Bodenwanne, die den gesamten Gerätebodenbereich abdeckt.

11. Kühlgerät nach einem der Ansprüche 1 bis 10, **dadurch gekennzeichnet, dass** das gesamte Kühlaggregat an der Decke bzw. im oberen Bereich an der Rückwand angeordnet ist.
